(19) Europäisches Patentamt / European Patent Office / Office européen des brevets

(11) **EP 3 839 488 B1**

(12) **FASCICULE DE BREVET EUROPEEN**

(45) Date de publication et mention
de la délivrance du brevet:
**14.12.2022 Bulletin 2022/50**

(21) Numéro de dépôt: **20215577.6**

(22) Date de dépôt: **18.12.2020**

(51) Classification Internationale des Brevets (IPC):
**G01N 23/203** (2006.01)   **G01L 5/00** (2006.01)
**G01B 15/06** (2006.01)   **G01L 1/25** (2006.01)

(52) Classification Coopérative des Brevets (CPC):
**G01N 23/203; G01B 15/06; G01L 1/25;
G01L 5/0047**

(54) **DISPOSITIF DE DÉTERMINATION DE CONTRAINTES RÉSIDUELLES PAR DIFFRACTION**

VORRICHTUNG ZUR BESTIMMUNG VON RESTSPANNUNGEN DURCH BEUGUNG

DEVICE FOR DETERMINING RESIDUAL STRESS BY DIFFRACTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2019 FR 1915192**

(43) Date de publication de la demande:
**23.06.2021 Bulletin 2021/25**

(73) Titulaire: **Commissariat à l'énergie atomique
et aux énergies alternatives
75015 Paris (FR)**

(72) Inventeur: **GERGAUD, Patrice
38054 Grenoble Cedex 09 (FR)**

(74) Mandataire: **Brevalex
95, rue d'Amsterdam
75378 Paris Cedex 8 (FR)**

(56) Documents cités:
**WO-A1-2014/010260    WO-A1-2014/076974**

## Description

**DOMAINE TECHNIQUE ET ÉTAT DE LA TECHNIQUE ANTÉRIEURE**

La présente invention se rapporte à un dispositif de détermination des contraintes mécaniques résiduelles par diffraction.

Le dispositif de détermination s'applique à des objets comportant un matériau cristallin ou polycristallin, par exemple des métaux, des alliages, des matériaux semi-conducteurs.

Les méthodes d'analyse de contraintes sont généralement des méthodes extensométriques, dans lesquelles on mesure les variations de longueur d'une jauge de déformation. De ces variations, connaissant les propriétés élastiques du matériau, on en déduit les contraintes mécaniques de la matière au point examiné. On emploie la diffraction des rayons X et la diffraction de neutrons pour déterminer des contraintes mécaniques résiduelles en utilisant comme jauge de déformation, une jauge interne au matériau, qui est la distance interréticulaire d'une famille de plans du cristal.

La relation de Bragg permet en effet de calculer la distance interréticulaire $d_{hkl}$ pour une famille de plans (hkl) en position de diffraction :

$$d_{hkl} = \frac{\lambda_0}{2\sin\theta_{hkl}} \ [1]$$

où $\theta_{hkl}$ l'angle de diffraction de la famille de plan (hkl) et $\lambda_0$ est la longueur d'onde des rayons X.

Sous l'action d'un champ de contraintes les distances interréticulaires sont modifiées, ce qui se traduit par une modification de la position des raies de diffraction.

A une variation de la distance interréticulaire est associée une déformation résultante :

$$\varepsilon = \frac{d - d_0}{d_0} \ [2]$$

où $d_0$ et $d$ sont les distances interréticulaires d'une famille de plans respectivement libre de contrainte et sous contrainte. En remplaçant $d$ par l'expression de la loi de Bragg (équation 1), l'équation 2 s'écrit alors :

$$\varepsilon = \frac{\sin\theta_0}{\sin\theta} - 1 \ [3]$$

où $\theta_0$ et $\theta$ désignent respectivement l'angle de Bragg en l'absence de contrainte et sous contrainte. A partir de la forme différenciée de la relation de Bragg (équation 1) la déformation peut également s'écrire :

$$\varepsilon = -\frac{1}{2}\cot g(\theta_0)\Delta 2\theta \ [4]$$

avec

$$\Delta 2\theta = 2\theta - 2\theta_0$$

Les relations (3) et (4) montrent qu'il est nécessaire de connaître la valeur $\theta_0$ pour calculer la déformation $\varepsilon$.

Il existe également la méthode de détermination des contraintes par diffraction dite méthode des $\sin^2\psi$ qui consiste à mesurer la variation de position d'un pic de diffraction (pic de Bragg) pour différentes inclinaisons $\psi$ et $\phi$ de l'échantillon. Cette méthode est par exemple décrite dans le document "Residual Stress : Measurement by Diffraction and Interpretation", Authors: Noyan, Ismail C., Cohen, Jerome B. Series: Materials Research and Engineering, Springer; 1987 edition (August 24, 1987),ISBN-10: 0387963782, ISBN-13: 978-0387963785.

Cette méthode permet de s'affranchir de la connaissance précise de l'angle $\theta_0$.

En prenant l'hypothèse d'une contrainte biaxiale isotrope dans le plan de l'échantillon,

On peut écrire :

$$\varepsilon_{\phi\psi} = \frac{1 + v_f}{E_f}\sigma\sin^2\psi - \frac{2v_f}{E_f}\sigma$$

On obtient alors une relation linéaire entre la variation de position du pic de Bragg et le $\sin^2\Psi$ $\psi$ étant l'angle d'inclinaison entre la normale à l'échantillon et le vecteur de diffraction. La détermination de la pente de la droite permet de calculer la constante mécanique résiduelle $\sigma$ à partir des constantes élastiques du matériau de l'échantillon $v_f$ et $E_f$.

Expérimentalement, pour effectuer ces mesures, il est usuel de choisir un pic de Bragg $2\theta$ au grand angle de diffraction, typiquement > 100°, et de suivre sa position en fonction de l'inclinaison $\psi$, qui définit ainsi une direction de mesure par rapport à la normale à l'échantillon. Pour faire varier l'inclinaison $\psi$, l'échantillon est fixé sur un goniomètre et la surface de l'échantillon est ensuite alignée précisément sur le point central du goniomètre. La position du pic de diffraction est enregistrée, par exemple en enregistrant directement la trace du faisceau diffracté sur un détecteur surfacique désigné détecteur 2D.

Dans le cas de l'utilisation d'un détecteur 2D standard, la gamme angulaire en $\psi$ couverte par le dé-

tecteur est une combinaison de la taille du détecteur et de sa distance à l'échantillon. Néanmoins cette distance échantillon-détecteur est limitée par l'encombrement du détecteur qui, s'il est trop près de l'échantillon, peut intercepter le faisceau incident. La gamme d'angle $\psi$ observable est alors réduite. Il est alors nécessaire de tourner l'échantillon autour de l'axe X dans la plan de l'échantillon d'un angle $\psi'$ pour définir une nouvelle gamme d'angle mesurables $\psi' \pm \Delta\psi$.

Cette méthode d'une part, requiert un alignement précis de l'échantillon avec le point central du goniomètre, ce qui peut être source d'erreur, d'autre part requiert de mettre en rotation l'échantillon.

Or la mise en rotation peut être difficile, voire impossible dans le cas d'objets de grande taille et/ou de masse importante.

Le document WO 2014/076974 A1 divulgue un autre exemple de dispositif permettant de déterminer les contraintes résiduelles d'un objet par diffraction et utilisant un goniomètre.

## EXPOSÉ DE L'INVENTION

C'est par conséquent un but de la présente invention d'offrir un dispositif de détermination des contraintes résiduelles dans un objet, de mise en œuvre plus simple que les dispositifs de l'état de la technique, et qui peut être adapté à une application à des objets volumineux et/ou lourds.

Le but mentionné ci-dessus est atteint par un dispositif de détermination des contraintes mécaniques dans un objet par diffraction comportant une source de rayons X ou de neutrons, un dispositif de détection capable de mesurer au moins deux pics de diffraction à deux orientations $|\psi|$ différentes, ledit dispositif de détection étant disposé entre la source et l'échantillon. En outre, la direction du faisceau incident émis par la source forme un angle $\psi_0$ non nul avec la direction normale à la surface de l'échantillon.

En d'autres termes, on choisit un détecteur surfacique ou au moins deux détecteurs linéiques, la disposition du détecteur par rapport à la source et l'orientation $\psi_0$ non nulle, ce qui permet d'atteindre une large gamme d'inclinaison $\psi$.

De préférence, l'orientation $\psi_0$ est au moins égal à $\Delta\psi/2$.

Le dispositif de détection peut alors mesurer simultanément plusieurs pics de diffraction à différents angles d'inclinaisons $\psi$ sur une large gamme de valeur de $\psi$, et ainsi permettre la détermination de la pente de la fonction linéaire $\Delta 2\theta = f(\sin^2\psi)$ et donc la détermination de la contrainte $\sigma$.

Dans un exemple très avantageux, le dispositif de détection est un détecteur surfacique comportant un orifice destiné à être traversé par le faisceau incident.

Dans cet exemple, les pics de diffraction correspondant à des angles $\psi$ entre deux valeurs extrêmes d'angle $\psi$ sont détectés. Le tracé de la droite et la détermination de la pente sont rendus plus précis.

Le dispositif de détermination est donc capable de collecter simultanément plusieurs pics de diffraction à des valeurs d'inclinaison $\psi$ différentes sans requérir de déplacement de l'échantillon. Le dispositif est alors adapté à la détermination de contraintes résiduelles dans un objet volumineux et/ou lourd. En outre l'acquisition des pics de diffraction est rapide et ne requiert pas un alignement précis avec le point précis du goniomètre.

La présente invention a alors pour objet un dispositif selon la revendication 1.

Dans un exemple de réalisation, le dispositif de détection comporte un détecteur surfacique comportant une ouverture traversante alignée avec la direction incidente.

Dans un exemple de réalisation, les moyens pour fixer un angle non nul entre la direction normale à la surface de l'objet et la direction incidente comportent un porte-objet destiné à supporter l'objet et disposé en aval du dispositif de détection en considérant le sens du faisceau incident. De préférence, le porte-objet comporte des moyens pour modifier l'angle entre la direction normale à la surface de l'objet et la direction incidente.

Avantageusement, le porte-objet comporte des moyens pour déplacer l'objet par rapport au faisceau incident de sorte à modifier la zone de l'objet éclairée par le faisceau incident.

Le dispositif de détermination peut avantageusement comporter des moyens pour modifier la distance entre le dispositif de détection et l'objet.

Dans un autre exemple de réalisation, le dispositif de détermination est portatif et les moyens pour fixer un angle non nul entre la direction normale à la surface de l'objet et la direction incidente comportent des moyens de mesure de l'angle entre la direction normale à la surface de l'objet et la direction incidente.

Le dispositif de détermination peut comporter des moyens de mesure de la distance entre la zone de l'objet et le dispositif de détection.

La présente invention a également pour objet un procédé selon la revendication 9.

Le procédé peut comporter le déplacement relatif de la source, de l'objet et du dispositif de détection de sorte à modifier la zone où l'on souhaite déterminer la contrainte résiduelle et répétition des étapes b) à e), de sorte à réaliser une cartographie des contraintes résiduelles d'au moins deux zones d'un objet.

## BRÈVE DESCRIPTION DES DESSINS

La présente invention sera mieux comprise sur la base de la description qui va suivre et des dessins en annexe sur lesquels:

La figure 1 est une représentation schématique d'un exemple de dispositif de détermination de contraintes dans un objet selon l'invention.
La figure 2 est une représentation schématique d'un dispositif de détermination portatif.

La figure 3 est une représentation schématique d'un dispositif de détermination comportant des détecteurs linéiques.

## EXPOSÉ DÉTAILLÉ DE MODES DE RÉALISATION PARTICULIERS

L'angle $2\theta$ est l'angle de Bragg entre le faisceau incident et le faisceau diffracté.

$\Delta 2\theta$ est la variation de l'angle de Bragg.

$\psi$ est l'angle entre le vecteur normal à la surface de l'échantillon N et le vecteur de diffraction normal au plan diffractant de l'échantillon ND.

Le vecteur de diffraction ND est la bissectrice entre le faisceau incident et le faisceau diffracté.

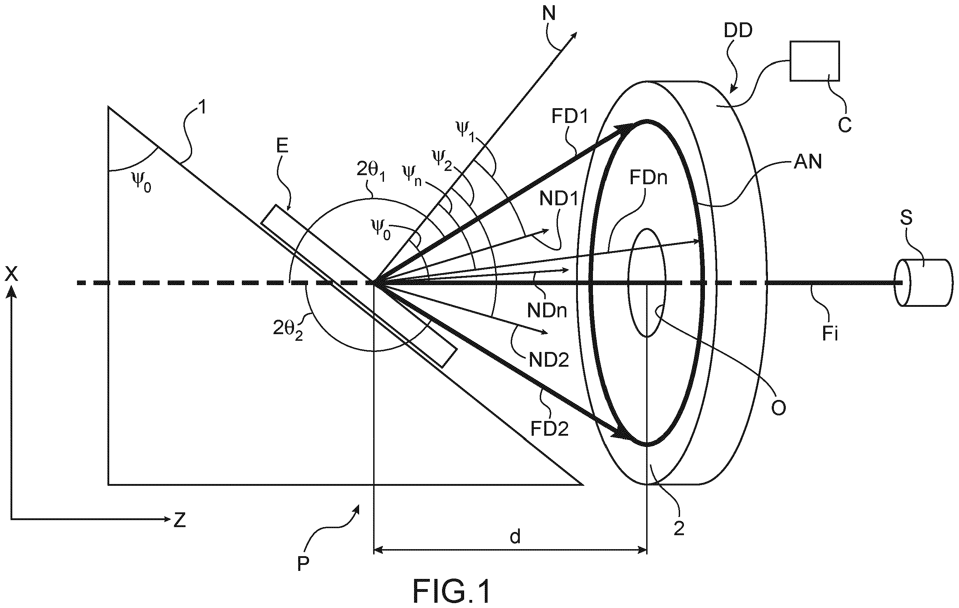

Sur la figure 1, on peut voir un exemple de dispositif de détermination des contraintes résiduelles dans un objet ou échantillon E. Pour cela on cherche à acquérir des données sur l'échantillon pour pouvoir tracer la fonction linéaire $\Delta 2\theta = f(\sin^2 \psi)$, afin d'en déterminer la pente, qui permet d'obtenir la valeur de contrainte résiduelle.

Le dispositif de la figure 1 est adapté à une application à des objets de tailles plus réduites, mais la description qui va suivre s'applique également à un dispositif de détermination appliqué à de gros objets.

Le dispositif comporte une source S émettant un faisceau incident Fi, il peut s'agir d'une source de rayons X ou une source de neutrons. Le faisceau incident Fi a une direction Z, dite direction incidente.

Le dispositif comporte un porte-échantillon P ou support présentant une surface 1 destinée à supporter l'échantillon. La surface 1 forme un angle $\psi_0$ avec la verticale.

Le dispositif de détermination comporte également un dispositif de détection DD des pics de diffraction émis par l'échantillon. Le dispositif de détection DD est disposé entre la source S et l'échantillon E. Dans l'exemple représenté, il s'agit d'un détecteur surfacique, également désigné détecteur 2D. Par exemple, il peut s'agir d'un détecteur XPAD-WOS développé par la société ImXPAD. Le détecteur comporte une ouverture O traversante alignée avec l'axe Z pour permettre le passage du faisceau incident Fi et éviter que le détecteur n'intercepte le faisceau incident.

Le dispositif de détection DD comporte une face active 2 orientée vers l'échantillon. d est la distance entre la face active du dispositif de détection et l'intersection entre le faisceau incident et la surface de l'échantillon. De préférence, l'ouverture O est au centre de la surface active offrant une répartition symétrique de la surface active autour de la direction incidente.

Les dimensions de l'ouverture O et le diamètre du faisceau incident Fi sont choisies de sorte que le bord de l'ouverture O n'intercepte pas le faisceau incident Fi.

Le dispositif de détermination comporte également de moyens de traitement C des informations collectées pour en déduire la contrainte résiduelle, il s'agit par exemple d'un ordinateur.

Le fonctionnement du dispositif selon l'invention va maintenant être décrit.

Considérons que le dispositif comporte une source de rayons X générant un faisceau incident Fi ponctuel. La longueur d'onde du faisceau incident est choisie de sorte qu'un pic de diffraction du matériau de l'échantillon à analyser soit mesurable par le détecteur DD en condition de réflexion.

La source de rayons X émet des rayons X le long de la direction Z. les rayons X frappant l'échantillon sont diffusés par les atomes de l'échantillon et vont interférer entre eux. Pour certains angles de déviation $2\theta$, les rayons X diffusés interfèrent constructivement et sont détectés par le détecteur, il s'agit des pics de diffraction.

Les rayons diffractés sont captés par la surface active du détecteur.

Sur la figure 1, on peut voir un faisceau diffracté FD1 avec un angle de Bragg $2\theta 1$, et un faisceau diffracté FD2 avec un angle de Bragg $2\theta 2$.

Le détecteur 2D intercepte tous les faisceaux diffractés FDn avec un angle de diffraction $2\theta n$, ce qui forme un anneau de diffraction AN.

A chaque rayon diffracté correspond le vecteur de diffraction.

Désignons ND1, ND2, ND3 un vecteur de diffraction pour chaque rayon diffracté FD1, FD2, FDn. Chaque vecteur de diffraction présente une inclinaison $\psi_1$, $\psi_2$, $\psi_3$... respectivement par rapport à la normale N différente de celles des autres vecteurs de diffraction NDn. Par conséquent, à chaque valeur $2\theta n$, on associe un angle d'inclinaison $\psi_n$.

On peut alors déterminer la variation $\Delta 2\theta$ en fonction de $\psi$, qui est une fonction linéaire, en extraire sa pente et ainsi déterminer la contrainte $\sigma$ résiduelle en connaissant les constantes élastiques du matériau. Les couples $(\psi n, \theta n)$ sont déterminés à partir d'une seule acquisition. En outre la connaissance de $\theta_0$ n'est plus requise.

Puisque le vecteur de diffraction NDn est la bissectrice entre le faisceau incident Fi et le rayon diffracté FD, et que $\psi_n$ est repéré par rapport à la normale N,

$\Psi_n$ peut varier entre $\psi_1$ et $\psi_2$ avec

$$\Psi_1 = \Psi_0 - \Delta\Psi/2$$

$$\Psi_2 = \Psi_0 + \Delta\Psi/2, \text{ et } \Delta\psi = 180 - 2\theta$$

A titre d'exemple, pour un pic de diffraction ayant un angle de Bragg

$2\theta = 120°$, la gamme en $\psi$ mesurable simultanément est égale à 60°. Si le choix de l'angle $\psi_0$ est de 30°, alors les valeurs de $\psi$ mesurées sont comprises entre 0° et 60°, i.e. une gamme en $\sin^2 \psi$ de 0 à 0,75 ce qui est suffisant pour la plupart des analyses de contraintes par cette technique.

Par exemple, la source de rayons X est une source X au Cuivre, ayant une longueur d'onde 1,54 Angströms, une puissance 45 kV, 40 mA (2,2 kW). La taille du spot est définie par les collimateurs en sortie de source, typiquement de l'ordre de 1 mm².

Le choix de l'angle $\psi_0$ de l'échantillon peut être ajusté en fonction de l'angle de diffraction $2\theta$ pour définir l'intervalle de valeurs de l'angle d'inclinaison $\psi$ mesurables.

Grâce au dispositif selon l'invention, on peut mesurer simultanément les pics de diffraction entre $\Psi_0 - \Delta\Psi$ et $\Psi_0 + \Delta\Psi$ sans rotation de l'échantillon. Il n'est donc plus nécessaire d'utiliser un goniomètre. Les difficultés quant à la mise en place de l'échantillon sur le goniomètre sont donc supprimées.

En outre, le dispositif offre une grande liberté de configuration. En effet, seule la variation de l'angle de diffraction $2\theta$ en fonction de $\psi$ est utilisée. La distance d entre l'échantillon et le détecteur peut être modifiée librement tant que le cône de diffraction impacte la partie active du détecteur.

Le calcul de l'angle de diffraction se fait par la détermination de la position de l'anneau de diffraction sur le détecteur 2D et la distance d entre l'échantillon et le détecteur. Comme indiqué précédemment, cette distance n'a pas besoin d'être connue précisément car seules les variations de l'angle sont à considérées.

Néanmoins il peut être avantageux de déterminer cette distance avant d'effectuer les mesures pour une calibration de la position du faisceau par rapport au détecteur. Pour cela, on peut utiliser un matériau de référence, par exemple le silicium ou le quartz, dont on connaît les angles de diffraction pour prédéterminer cette distance d.

L'angle de Bragg dépend de la longueur d'onde du rayon incident d'après la relation de Bragg (1), le choix de la longueur d'onde permet de s'assurer que le pic de diffraction est dans la zone angulaire couverte par le détecteur, i.e. que les rayons diffractés vont être interceptés par le détecteur. De manière avantageuse, la distance d entre l'échantillon et le détecteur peut être ajustée en combinaison avec le choix de la longueur d'onde pour s'assurer que les rayons diffractés soient interceptés par le détecteur. Pour cela le support et/ou la source sont mobiles le long de l'axe Z.

En outre le support peut être tel qu'il permette de modifier l'angle $\psi_0$ afin de s'adapter à plusieurs matériaux. Par exemple, des moyens permettent d'incliner plus ou moins le support, comme par exemple des vérins. En variante on dispose d'un jeu de cales inclinées présentant des inclinaisons différentes.

On peut ajuster au mieux la taille du détecteur en déterminant la variation potentielle de la position du pic de diffraction en fonction de l'angle $\psi$, ce qui permet de limiter le coût de revient du détecteur.

A titre d'exemple, le détecteur utilisé est un détecteur XPAD-WOS présentant une surface active 15×9 cm², et une dimension zone morte au centre du détecteur 1 cm².

Pour une distance d = 5 cm, la gamme angulaire en $2\theta$ observable est de [123° ; 174°].

Pour une distance d = 10 cm, la gamme angulaire en $2\theta$ observable est de [143° ; 177°].

Pour une distance d = 20 cm, la gamme angulaire en $2\theta$ observable est de [167° ; 178°].

De manière très avantageuse, on peut acquérir les variations de la position du pic de diffraction en fonction de l'angle $\psi$ en plusieurs zones de l'échantillon pour obtenir une cartographie spatiale des contraintes résiduelles dans l'échantillon.

Pour cela, on déplace l'échantillon sur le support de sorte à placer la zone à analyser sur le trajet du faisceau incident et à acquérir un cliché de diffraction pour chaque zone.

De manière très avantageuse, le dispositif comporte un support mobile selon les trois directions de l'espace pour positionner la zone à analyser sur le trajet du faisceau. Le déplacement du support mobile est manuel ou motorisé. Le déplacement peut être commandé de sorte à réaliser la cartographie des mêmes zones sur plusieurs échantillons.

L'invention permet d'obtenir un angle de Bragg $2\theta$ maximum mesurable le plus grand possible pour augmenter la précision, en effet il peut aisément être supérieur à 175° en choisissant correctement la dimension de l'ouverture dans le détecteur et la distance d entre l'échantillon et le détecteur en pratique rarement supérieure à 160°.

Le dispositif selon l'invention peut permettre d'atteindre un gain d'un facteur 4 en termes de résolution.

Dans l'exemple décrit ci-dessus, le dispositif de détermination est fixe, et la source est immobile par rapport au support avec une possibilité de variation de la distance d éventuellement.

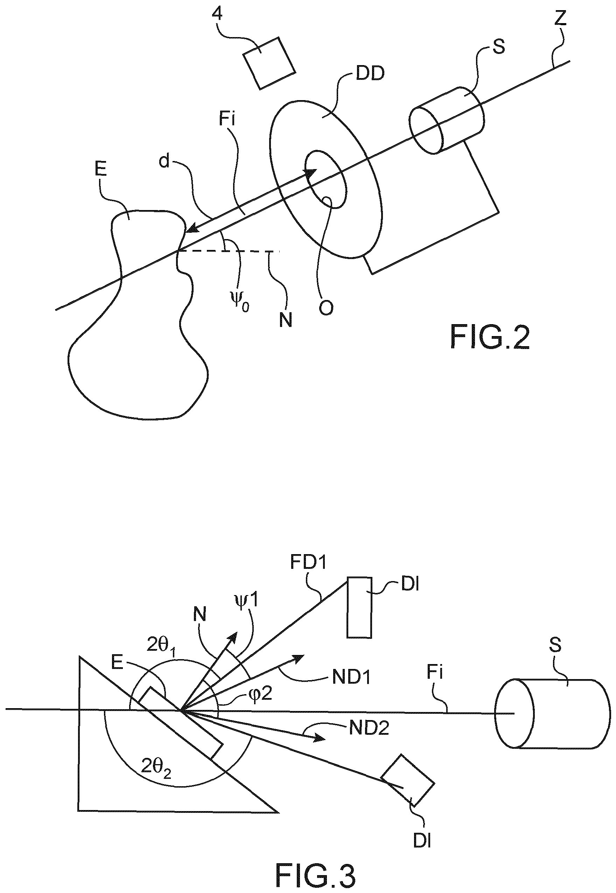

Selon un autre exemple représenté sur la figure 2, le dispositif de détermination est portatif, il comporte la source S et le dispositif de détection DD, qui sont de préférence fixes l'un par rapport à l'autre pour former un ensemble facilement transportable. Le dispositif de détermination est positionné à proximité d'un objet dont on souhaite déterminer les contraintes résiduelles. Par exemple, il peut s'agir d'un objet E quelconque par exemple un objet volumineux et/ou de masse importante, et permettre de déterminer in situ les contraintes résiduelles dans une zone de l'objet à partir d'un seul cliché de diffraction. Comme cela est schématisé c'est le dispositif D2 qui est déplacé par rapport à l'objet E.

Plusieurs zones peuvent être scannées en déplaçant le dispositif de détermination. Par exemple l'objet peur être une aile d'avion, et le dispositif selon l'invention peut permettre d'obtenir relativement facilement et rapidement une cartographie des contraintes résiduelles dans l'aile d'avion.

Lors de l'acquisition du cliché de diffraction, la source est orientée par rapport à la surface de l'objet de sorte que $\psi_0$ soit non nul.

Le dispositif de détermination permet alors des déterminations de contraintes résiduelles sur des objets en trois dimensions.

Le dispositif de détermination permet de mesures in situ plus faciles. Il peut être envisagé de réaliser des mesures dans des conditions particulières, par exemple de température.

De préférence, le dispositif comporte des moyens 4 de mesure de l'angle $\psi_0$ et éventuellement également des moyens de mesure de la distance d. Par exemple des moyens de type laser peuvent être intégrés au dispositif de détermination. De préférence, on cherche à mesure $\Psi 0$ avec une précision d'environ 5°. Un inclinomètre type niveau à bulle ou laser convient.

Selon un autre mode de réalisation représenté sur la figure 3, le dispositif de détection comporte au moins deux détecteurs linéiques DI disposés angulairement par rapport à l'axe du faisceau incident de sorte à détecter des pics de diffraction à des angles $|\psi|$ différents en valeur absolue. De préférence, au moins cinq, voire sept capteurs linéiques sont mis en œuvre pour permettre une détermination précise de la droite $\Delta 2\theta = f(\sin^2\psi)$. De préférence, les détecteurs sont disposés aux deux valeurs min et max de l'angle $\psi$

Le dispositif de détermination des contraintes résiduelles selon l'invention est donc de mise en œuvre plus simple que les dispositifs de l'état de la technique et également plus rapide. En outre il offre l'avantage de pouvoir être utilisé pour déterminer les contraintes résiduelles sur des objets difficilement manipulables.

**Revendications**

1. Dispositif de détermination de contraintes résiduelles d'au moins une zone d'un objet (E), comportant :

   - une source (S) de rayons X ou de neutrons émettant un faisceau incident selon une direction incidente (Z),
   - des moyens configurés pour fixer un angle ($\psi_0$) non nul entre une direction normale (N) à une surface de l'objet (E) et la direction incidente (Z), le faisceau incident étant diffracté par la zone de l'objet (E) en une pluralité de rayons (FD), chaque rayon ($FD_n$) étant diffracté avec un angle de Bragg ($2\theta$), à chaque rayon ($FD_n$) correspondant un vecteur de diffraction ($ND_n$) qui est la bissectrice entre le faisceau incident et ledit rayon diffracté ($FD_n$), ledit vecteur de diffraction présentant un angle d'inclinaison ($\psi_n$) par rapport à ladite direction normale (N),
   - un dispositif de détection (DD) comportant une ouverture (O) alignée avec la direction incidente et comportant des moyens munis d'au moins une surface active pour intercepter simultanément les rayons diffractés pour au moins deux valeurs de l'angle de Bragg ($2\theta_1$, $2\theta_2$) différentes à deux angles d'inclinaison ($\psi_1$, $\psi_2$) différents, permettant l'acquisition d'au moins un cliché de diffraction,
   - le dispositif de détection (DD) étant disposé par rapport à la source (S) de sorte qu'il soit entre la source (S) et l'emplacement prévu pour l'objet (E) et la surface active (2) soit en regard de l'emplacement prévu pour l'objet (E),
   - des moyens de traitements (C) dudit au moins un cliché de diffraction et de détermination des contraintes résiduelles, **caractérisé en ce que** les moyens de traitements sont configurés pour déterminer deux paires de valeurs d'angle de Bragg et d'angle d'inclinaison ([$2\theta_1$, $\psi_1$] ; ([$2\theta_2$, $\psi_2$])à partir dudit au moins un cliché et déterminer, à partir desdites paires de valeurs, une pente d'une fonction $\Delta 2\theta = f(\sin^2 \psi)$ correspondant aux contraintes résiduelles de la zone de l'objet.

2. Dispositif de détermination selon la revendication 1, dans lequel le dispositif de détection (DD) comporte un détecteur surfacique comportant une ouverture (O) traversante alignée avec la direction incidente (Z).

3. Dispositif de détermination selon la revendication 1 ou 2, dans lequel les moyens pour fixer un angle non nul entre la direction normale (N) à la surface de l'objet (E) et la direction incidente (Z) comportent un porte-objet (P) destiné à supporter l'objet (E) et disposé en aval du dispositif de détection (DD) en considérant le sens du faisceau incident.

4. Dispositif de détermination selon la revendication 1, 2 ou 3, dans lequel le porte-objet (P) comporte des moyens pour modifier l'angle ($\psi_0$) entre la direction normale (N) à la surface de l'objet et la direction incidente (Z).

5. Dispositif de détermination selon la revendication 4, dans lequel le porte-objet (P) comporte des moyens pour déplacer l'objet par rapport au faisceau incident de sorte à modifier la zone de l'objet éclairée par le faisceau incident.

6. Dispositif de détermination selon l'une des revendications 1 à 5, comportant de moyens pour modifier la distance entre le dispositif de détection et l'objet.

7. Dispositif de détermination selon la revendication 1 ou 2, dans lequel ledit dispositif de détermination est portatif et dans lequel les moyens pour fixer un angle ($\psi_0$) non nul entre la direction normale à la surface de l'objet et la direction incidente comportent des moyens de mesure (4) de l'angle ($\psi_0$) entre la direction normale (N) à la surface de l'objet et la direction incidente (Z).

**8.** Dispositif de détermination selon l'une des revendications 1 à 7, comportant des moyens de de mesure de la distance entre la zone de l'objet et le dispositif de détection.

**9.** Procédé de détermination de la contrainte résiduelle en au moins une zone d'un objet mettant en œuvre un dispositif de détermination selon l'une des revendications précédentes, comportant :

a) Le positionnement de la source, de l'objet et du dispositif de détection de sorte que le dispositif de détection soit entre la source et l'objet et la surface active du dispositif de détection soit en regard de ladite zone de l'objet, et de sorte que l'angle ($\psi_0$) entre la direction normale à ladite zone de l'objet et la direction incidente soit non nul,

b) Génération d'un faisceau incident,

c) Acquisition d'un cliché de diffraction comportant plusieurs pics de diffraction,

d) Traitement du clichés de diffraction pour extraire au moins deux valeurs d'angle de Bragg $2\theta$ à deux valeurs d'angle d'inclinaison $\psi$ différentes,

e) Détermination de la contrainte résiduelle dans lequel

le faisceau incident est diffracté par la zone de l'objet (E) en une pluralité de rayons (FD), chaque rayon ($FD_n$) étant diffracté avec un angle de Bragg ($2\theta$), à chaque rayon ($FD_n$) correspondant un vecteur de diffraction ($ND_n$) qui est la bissectrice entre le faisceau incident et ledit rayon diffracté ($FD_n$), ledit vecteur de diffraction présentant un angle d'inclinaison ($\psi_n$) par rapport à ladite direction normale (N),

le traitement comprenant déterminer deux paires de valeurs d'angle de Bragg et d'angle d'inclinaison ([$2\theta_1$, $\psi_1$] ; ([$2\theta_2$, $\psi_2$]) à partir dudit au moins un cliché et déterminer, à partir desdites paires de valeurs, une pente d'une fonction $\Delta 2\theta$ = f(sin$^2$ $\psi$) correspondant aux contraintes résiduelles de la zone de l'objet.

**10.** Procédé de détermination selon la revendication 9, comportant le déplacement relatif de la source, de l'objet et du dispositif de détection de sorte à modifier la zone où l'on souhaite déterminer la contrainte résiduelle et répétition des étapes b) à e), de sorte à réaliser une cartographie des contraintes résiduelles d'au moins deux zones d'un objet.

**Patentansprüche**

**1.** Vorrichtung zur Bestimmung von Restspannungen von mindestens einem Bereich eines Objekts (E), beinhaltend:

- eine Quelle (S) von Röntgen- oder Neutronenstrahlen, die ein einfallendes Strahlenbündel in einer Einfallsrichtung (Z) emittiert,
- Mittel, konfiguriert, um einen Winkel ($\psi_0$) ungleich null zu fixieren zwischen einer Richtung senkrecht (N) zu einer Oberfläche des Objekts (E) und der Einfallsrichtung (Z), wobei das einfallende Strahlenbündel durch den Bereich des Objekts (E) zu einer Vielzahl von Strahlen (FD) gebeugt wird, wobei jeder Strahl ($FD_n$) mit einem Bragg-Winkel ($2\theta$) gebeugt wird, wobei jedem Strahl ($FD_n$) ein Beugungsvektor ($ND_n$) entspricht, der die Winkelhalbierende zwischen dem einfallenden Strahlenbündel und dem gebeugten Strahl ($FD_n$) ist, wobei der Beugungsvektor einen Neigungswinkel ($\psi_n$) in Bezug auf die senkrechte Richtung (N) aufweist,
- eine Erfassungsvorrichtung (DD), die eine Öffnung (O) beinhaltet, die auf die Einfallsrichtung ausgerichtet ist, und Mittel beinhaltet, die mit mindestens einer aktiven Oberfläche ausgestattet sind, zum gleichzeitigen Abfangen der gebeugten Strahlen für mindestens zwei verschiedene Werte des Bragg-Winkels ($2\theta_1$, $2\theta_2$) in zwei verschiedenen Neigungswinkeln ($\psi_1$, $\psi_2$), die das Erlangen von mindestens einem Beugungsmuster ermöglichen,
- wobei die Erfassungsvorrichtung (DD) in Bezug auf die Quelle (S) so angeordnet ist, dass sie zwischen der Quelle (S) und der für das Objekt (E) vorgesehenen Stelle liegt, und die aktive Oberfläche (2) gegenüber der für das Objekt (E) vorgesehenen Stelle liegt,
- Mittel zur Bearbeitung (C) des mindestens einen Beugungsmusters und zur Bestimmung von Restspannungen, **dadurch gekennzeichnet, dass** die Bearbeitungsmittel konfiguriert sind, um zwei Wertepaare von Bragg-Winkeln und Neigungswinkeln ([$2\theta_1$, $\psi_1$]; [$2\theta_2$, $\psi_2$]) ausgehend von dem mindestens einen Muster zu bestimmen, und eine Steigung einer Funktion $\Delta 2\theta$ = f(sin$^2\psi$) ausgehend von den Wertepaaren zu bestimmen, entsprechend den Restspannungen des Bereichs des Objekts.

**2.** Bestimmungsvorrichtung nach Anspruch 1, wobei die Erfassungsvorrichtung (DD) einen Oberflächendetektor beinhaltet, der eine durchgehende Öffnung (O) beinhaltet, die auf die Einfallsrichtung (Z) ausgerichtet ist.

**3.** Bestimmungsvorrichtung nach Anspruch 1 oder 2, wobei die Mittel zum Fixieren eines Winkels ungleich null zwischen der Richtung senkrecht (N) zur Oberfläche des Objekts (E) und der Einfallsrichtung (Z) einen Objektträger (P) beinhalten, der zum Stützen des Objekts (E) ausersehen ist, und stromabwärts der Erfassungsvorrichtung (DD) angeordnet ist, unter Berücksichtigung der Richtung des einfallenden Strahlenbündels.

4. Bestimmungsvorrichtung nach Anspruch 1, 2 oder 3, wobei der Objektträger (P) Mittel zum Verändern des Winkels ($\psi_0$) zwischen der Richtung senkrecht (N) zur Oberfläche des Objekts und der Einfallsrichtung (Z) beinhaltet.

5. Bestimmungsvorrichtung nach Anspruch 4, wobei der Objektträger (P) Mittel zum Bewegen des Objekts in Bezug auf das einfallende Strahlenbündel beinhaltet, um den Bereich des Objekts zu verändern, der durch das einfallende Strahlenbündel beleuchtet wird.

6. Bestimmungsvorrichtung nach einem der Ansprüche 1 bis 5, Mittel zum Verändern des Abstandes zwischen der Erfassungsvorrichtung und dem Objekt beinhaltend.

7. Bestimmungsvorrichtung nach Anspruch 1 oder 2, wobei die Bestimmungsvorrichtung tragbar ist und wobei die Mittel zum Fixieren eines Winkels ($\psi_0$) ungleich null zwischen der Richtung senkrecht zur Oberfläche des Objekts und der Einfallsrichtung Mittel zum Messen (4) des Winkels ($\psi_0$) zwischen der Richtung senkrecht (N) zur Oberfläche des Objekts und der Einfallsrichtung (Z) beinhalten.

8. Bestimmungsvorrichtung nach einem der Ansprüche 1 bis 7, Mittel zum Messen des Abstands zwischen dem Bereich des Objekts und der Erfassungsvorrichtung beinhaltend.

9. Verfahren zur Bestimmung der Restspannung in mindestens einem Bereich eines Objekts, unter Verwendung einer Bestimmungsvorrichtung nach einem der vorhergehenden Ansprüche, beinhaltend:

a) Die Positionierung der Quelle, des Objekts und der Erfassungsvorrichtung, so dass die Erfassungsvorrichtung zwischen der Quelle und dem Objekt liegt und die aktive Oberfläche der Erfassungsvorrichtung gegenüber dem Bereich des Objekts liegt, und dass der Winkel ($\psi_0$) zwischen der Richtung senkrecht zum Bereich des Objekts und der Einfallsrichtung ungleich null ist,

b) Erzeugung eines einfallenden Strahlenbündels,

c) Erlangen eines Beugungsmuster, das mehrere Beugungsspitzen beinhaltet,

d) Bearbeitung der Beugungsmuster, um mindestens zwei Bragg-Winkelwerte $2\theta$ bei zwei verschiedenen Neigungswinkelwerten $\psi$ zu extrahieren,

e) Bestimmung der Restspannung, wobei

das einfallende Strahlenbündel durch den Bereich des Objekts (E) zu einer Vielzahl von Strahlen (FD) gebeugt wird, wobei jeder Strahl ($FD_n$) mit einem Bragg-Winkel ($2\theta$) gebeugt wird, wobei jedem Strahl ($FD_n$) ein Beugungsvektor ($ND_n$) entspricht, der die Winkelhalbierende zwischen dem einfallenden Strahlenbündel und dem gebeugten Strahl ($FD_n$) ist, wobei der Beugungsvektor einen Neigungswinkel ($\psi_n$) in Bezug auf die senkrechte Richtung (N) aufweist,

die Bearbeitung das Bestimmen von zwei Wertepaaren von Bragg-Winkeln und Neigungswinkeln ($[2\theta_1, \psi_1]; [2\theta_2, \psi_2]$) ausgehend von dem mindestens einen Muster umfasst, und das Bestimmen, ausgehend von den Wertepaaren, einer Steigung einer Funktion $\Delta 2\theta = f(\sin^2\psi)$ entsprechend den Restspannungen des Bereichs des Objekts.

10. Bestimmungsverfahren nach Anspruch 9, die relative Verschiebung der Quelle, des Objekts und der Erfassungsvorrichtung beinhaltend, um den Bereich zu verändern, in dem die Restspannung bestimmt werden soll, und die Wiederholung der Schritte b) bis e), um eine Kartierung der Restspannungen von mindestens zwei Bereichen eines Objekts zu realisieren.

**Claims**

1. A device for determining residual stresses of at least one zone of an object (E), including:

- an X-ray or neutron source (S) emitting an incident beam along an incident direction (Z),
- means configured to set a non-zero angle ($\psi_0$) between a direction (N) normal to a surface of the object (E) and the incident direction (Z), the incident beam being diffracted by the zone of the object (E) into a plurality of rays (FD), each ray ($FD_n$) being diffracted with a Bragg angle ($2\theta$), to each beam ($FD_n$) corresponding a diffraction vector ($ND_n$) which is the bisector between the incident beam and said diffracted ray ($FD_n$), said diffraction vector having a tilt angle ($\psi_n$) relative to said normal direction (N),
- a detection device (DD) including an opening (O) aligned with the incident direction and including means provided with at least one active surface to simultaneously intercept the diffracted rays for at least two different values of the Bragg angle ($2\theta_1, 2\theta_2$) at two different tilt angles ($\psi_1, \psi_2$), allowing acquisition of at least one diffraction picture,
- the detection device (DD) being disposed relative to the source (S) so that it is between the source (S) and the location provided for the object (E) and the active surface (2) faces the location provided for the object (E),

- means (C) for processing said at least one diffraction picture and for determining the residual stresses, **characterised in that** the processing means are configured to determine two pairs of values of Bragg angle and tilt angle ($[2\theta_1, \psi_1]$;($[2\theta_2, \psi_2]$) from the said at least one picture and determine, from said pairs of values, a slope of a function $\Delta2\theta = f(\sin^2 \psi)$ corresponding to the residual stresses of the zone of the object.

2. The determination device according to claim 1, wherein the detection device (DD) includes a surface detector including a through opening (O) aligned with the incident direction (Z).

3. The determination device according to claim 1 or 2, wherein the means to set a non-zero angle between the direction (N) normal to the surface of the object (E) and the incident direction (Z) include an object-holder (P) for holding the object (E) and disposed downstream of the detection device (DD) considering the direction of the incident beam.

4. The determination device according to claim 1, 2 or 3, wherein the object holder (P) includes means to modify the angle ($\psi_0$) between the direction (N) normal to the surface of the object and the incident direction (Z).

5. The determination device according to claim 4, wherein the object holder (P) includes means to move the object relative to the incident beam so as to modify the object zone lit by the incident beam.

6. The determination device according to one of claims 1 to 5, including means to modify the distance between the detection device and the object.

7. The determination device according to claim 1 or 2, wherein said determination device is handheld and wherein the means to set a non-zero angle ($\psi_0$) between the direction normal to the surface of the object and the incident direction include means to measure (4) the angle ($\psi_0$) between the direction (N) normal to the surface of the object and the incident direction (Z).

8. The determination device according to one of claims 1 to 7, including means to measure the distance between the zone of the object and the detection device.

9. A method for determining the residual stress in at least one zone of an object implementing a determination device according to one of the preceding claims, including:

a) positioning the source, the object and the detection device so that the detection device is between the source and the object, and the active surface of the detection device faces said zone of the object, and so that the angle ($\psi_0$) between the direction normal to said zone of the object and the incident direction is non-zero,
b) generating an incident beam,
c) acquiring a diffraction picture including several diffraction peaks,
d) processing the diffraction picture to extract at least two values of Bragg angle $2\theta$ at two different values of tilt angle $\psi$,
e) determining the residual stress wherein the incident beam is diffracted by the zone of the object (E) into a plurality of rays (FD), each ray ($FD_n$) being diffracted with a Bragg angle ($2\theta$), to each ray ($FD_n$) corresponding a diffraction vector ($ND_n$) which is the bisector between the incident beam and said diffracted ray ($FD_n$), said diffraction vector having a tilt angle ($\psi_n$) relative to said normal direction (N),
the processing comprising determining two pairs of values of Bragg angle and tilt angle ($[2\theta_1, \psi_1]$;($[2\theta_2, \psi_2]$) from said at least one picture and determining, from said pairs of values, a slope of a function $\Delta2\theta = f(\sin^2 \psi)$ corresponding to the residual stresses of the zone of the object.

10. A determination method according to claim 9, including the relative movement of the source, the object and the detection device so as to modify the zone where it is desired to determine the residual stress and repeating steps b) to e), so as to perform a mapping of the residual stresses of at least two zones of an object.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014076974 A1

**Littérature non-brevet citée dans la description**

- Residual Stress : Measurement by Diffraction and Interpretation. **NOYAN ; ISMAIL C. ; COHEN ; JEROME B.** Series: Materials Research and Engineering. Springer, 24 Août 1987